# FASCICULE DE BREVET EUROPEEN

(11) **EP 2 649 370 B1**
(45) Date de publication et mention de la délivrance du brevet: **17.04.2019**
(21) Numéro de dépôt: 11811051.9
(22) Date de dépôt: 08.12.2011
(51) Int. Cl.: F23D 14/22, F23D 14/56, F23D 14/84, C03B 5/235

(54) **COMBUSTION A JETS DIVERGENTS DE COMBUSTIBLE**
VERBRENNUNG MIT DIVERGIERENDEN BRENNSTOFFSTRAHLEN
COMBUSTION WITH DIVERGENT JETS OF FUEL

(30) Priorité: 08.12.2010 FR 1060262
(43) Date de publication de la demande: 16.10.2013
(73) Titulaire: Saint-Gobain Glass France, 92400 Courbevoie (FR); Verallia France, 92400 Courbevoie (FR)
(72) Inventeur: ROUCHY, Patrice, F-92420 Vaucresson (FR); HAYAU, Frédéric, F-92150 Suresnes (FR)
(74) Mandataire: Saint-Gobain Recherche
(86) Numéro de dépôt international: PCT/FR2011/052903
(87) Numéro de publication internationale: WO 2012/076820

(56) Documents cités:
- EP-A2- 0 481 835
- WO-A1-2009/101312
- WO-A2-2009/101326
- US-A- 6 132 204
- US-A1- 2008 078 180

## Description

L'invention concerne un un four verrier à brûleurs transversaux ou à boucle.

L'augmentation de la productivité des fours verriers nécessite d'augmenter la puissance de leurs brûleurs. Cependant, selon la qualité du transfert de chaleur au verre, les réfractaires du four peuvent éventuellement être surchauffés et dégradés du fait des trop fortes puissances des brûleurs. C'est notamment le cas des régénérateurs des fours à brûleurs transversaux qui reçoivent directement la flamme du brûleur qui lui fait face. On cherche donc, à puissance de brûleur égale, à diminuer les températures dans les hauts de chambre (ou « hauts de régénérateur » ou « cerveau »).

Le EP921349 (ou US6244524) et la demande de brevet français n° 0754028 déposée le 26 mars 2007 ont proposé dans un but de réduction des NOx, un brûleur équipé d'au moins un injecteur, comportant un conduit d'amenée de combustible liquide, du type fioul, et un conduit d'amenée de fluide de pulvérisation disposé concentriquement par rapport audit conduit d'amenée de combustible liquide, ledit conduit d'amenée de combustible liquide comportant un élément percé de canaux obliques pour mettre le combustible liquide sous la forme d'un jet creux épousant substantiellement la paroi interne.

Le JP-A-2003269709 enseigne un procédé de chauffage de verre fondu dans un four à brûleurs transversaux équipé de régénérateurs et fonctionnant avec un combustible gazeux.

Le US4946382 enseigne un procédé de combustion d'un combustible liquide avec un comburant pouvant être de l'air enrichi en oxygène dans lequel le rapport de l'impulsion de l'oxygène sur l'impulsion du combustible est de 10 à 30.

Le WO2009/101312 enseigne un procédé de chauffage de verre fondu par un four comprenant des parois latérales équipées de brûleurs transversaux et muni de régénérateurs, caractérisé en ce qu'au moins un brûleur est alimenté en comburant comprenant moins de 30 vol % d'oxygène et en combustible de sorte que le rapport de l'impulsion du comburant sur l'impulsion du combustible va de 5 à 13.

Le US6132204 enseigne un brûleur à oxygène à monoimpulsion dont le jet de combustible est divisé en trois jets divergents afin d'étaler la flamme et ainsi mieux couvrir la surface du verre à chauffer. Avec un tel brûleur, il n'est pas possible de régler les impulsions à débits constant et il n'est donc pas possible de régler la longueur de flamme à débit constant.

On a maintenant trouvé que l'on pouvait sensiblement réduire la température en haut de régénérateur si le dispositif d'émission du combustible (généralement un injecteur métallique de brûleur) comprenait deux jets divergents au lieu d'un seul jet, et ce à puissance égale de brûleur. Alternativement, on peut choisir d'augmenter la puissance du brûleur concerné et donc la productivité tout en gardant la même température au niveau du régénérateur récupérant les fumées du brûleur.

L'invention concerne un four verrier comprenant un brûleur pour la production d'une flamme, ledit brûleur comprenant un injecteur placé dans une des parois du four, ledit injecteur comprenant au moins deux orifices d'émission de combustible dont les axes divergent d'au moins 16°. L'injecteur selon l'invention est à double impulsion de combustible et comprend une première canalisation dite haute pression et une deuxième canalisation dite basse pression, la deuxième canalisation entourant la première, la première canalisation comprenant en son bout (c'est-à-dire extrémité) au moins deux orifices d'émission de combustible, les axes desdits deux orifices divergeant d'au moins 16°. Généralement les axes desdits deux orifices divergent d'au plus 40°. Les deux jets de combustible participent à l'élaboration de la même flamme, même si à la racine la flamme peut apparaître en deux parties. En utilisation, c'est-à-dire en fonctionnement dans un four, les axes des deux orifices sont de préférence dans le même plan horizontal. La pression du combustible avant émission par les orifices peut par exemple être comprise entre 20 et 100 mbars s'il est gazeux. Si le combustible est liquide (fuel lourd) la pression du combustible avant émission par les orifices peut par exemple être compris entre 3 et 15 bars. Généralement la distance entre les axes des deux jets (ou orifices) à la sortie des deux orifices (points d'émission) est inférieure à 2 m et généralement inférieure à 150 mm. Généralement, les deux orifices divergents sont dans un injecteur et sont alimentés par la même canalisation de combustible. Notamment cette canalisation peut se terminer par un embout dans lequel sont ménagés les deux orifices divergents. Il existe généralement un point de convergence des axes des orifices (et donc aussi des jets divergents), ledit point de convergence étant généralement contenu dans cette canalisation unique alimentant en combustible les deux orifices.

Les deux orifices divergents selon l'invention sont généralement de section égale (aire de la surface d'ouverture perpendiculairement à l'axe de l'orifice) et délivrent généralement des jets de même impulsion.

L'injecteur selon l'invention est du type double-impulsion, c'est-à-dire comprenant deux canalisations séparées de combustible alimentées chacune par des pressions différentes de combustible, une haute pression et une basse pression, comme décrit par exemple dans la demande de brevet WO2009/101326. Le combustible haute pression peut être gazeux ou liquide alors que le combustible basse pression est toujours gazeux. Ces deux canalisations sont généralement concentriques, la canalisation basse-pression entourant généralement la canalisation haute-pression. Dans ce cas, les orifices délivrant des jets divergents équipent l'extrémité de la canalisation haute-pression. Généralement, la canalisation haute pression délivre 5 à 30% de la somme des débits des canalisations basse et haute pression. Généralement, la puissance du brûleur se règle par la basse-pression alors que la longueur de flamme se règle par la haute pression. La pression du combustible dans la canalisation haute pression avant émission par les orifices peut être comprise entre 20 et 100 mbars s'il est gazeux. Si le combustible est liquide (fuel lourd) la pression du combustible avant émission par la canalisation haute pression peut par exemple être compris entre 3 et 15 bars, généralement entre 5 et 10 bars. La pression du combustible gazeux dans la canalisation basse pression avant émission du combustible peut être comprise entre 0 et 50 mbars. Les données de pression dont il est question dans la présente demande sont bien entendu des pressions relatives (différence entre la pression absolue et la pression atmosphérique). La pression dans la canalisation haute-pression est supérieure à la pression dans la canalisation basse-pression.

Les deux jets divergents peuvent être alimentés par des canalisations indépendantes. Cependant, généralement, les deux jets divergents sont délivrés par le même injecteur métallique. Dans ce cas, la ou les canalisations métalliques aboutissant aux orifices sont reliées entre elles par une ou plusieurs pièces métalliques. L'injecteur peut comprendre une canalisation unique terminée par un embout comprenant les deux orifices. Les orifices sont alors en bout de la même (première) canalisation. Il existe alors un point de convergence des axes des orifices, lequel se trouve dans la (première) canalisation alimentant les deux orifices. Dans le cas d'un injecteur à double-impulsion, la première canalisation peut être contenue dans une seconde canalisation.

L'invention concerne un four équipé du brûleur selon l'invention, notamment un four à brûleurs transversaux ou un four à boucle. L'invention s'adresse notamment aux fours verriers équipés de brûleurs transversaux et de régénérateurs ou aux fours verriers à boucle équipés de régénérateurs.

Dans le cadre de la présente demande, le terme « brûleur » désigne un ensemble comprenant une arrivée d'air et un dispositif selon l'invention (généralement un injecteur) pouvant être placé dans une des parois d'un tel four. L'arrivée d'air est généralement appelée veine d'air. Le brûleur est dans une paroi latérale (également appelées piédroits) s'il s'agit d'un four à brûleurs transversaux, un régénérateur lui faisant face. Le brûleur est dans la paroi amont s'il s'agit d'un four à boucle, le retour de la flamme aboutissant dans un régénérateur situé derrière la paroi amont. L'invention concerne un four comprenant un brûleur selon l'invention et un régénérateur récupérant les fumées du brûleur. L'invention concerne également un procédé de chauffage de verre par un four selon l'invention, ledit procédé pouvant le cas échéant être un procédé de fusion du verre.

Un brûleur peut comprendre plusieurs injecteurs.

Le comburant est de préférence en excès dans le cadre de la réaction de combustion. Les flammes générées sont donc préférentiellement oxydantes.

Dans le cadre de la présente invention, le comburant est l'air ou l'air légèrement enrichi en oxygène de sorte que la teneur totale en oxygène dans le comburant est inférieure à 30 vol % et généralement inférieure à 25 vol%. Cette teneur totale en oxygène dans le comburant est supérieure à 15 vol %.

Le comburant est préchauffé avant de quitter sa canalisation d'amenée. Sa température est supérieure à 1200°C. Elle est généralement inférieure à 1500°C.

Dans le cadre de la présente invention, le combustible peut être liquide. Il peut s'agir d'un combustible fossile liquide couramment utilisé dans les dispositifs de combustion pour chauffer les matières vitrifiables dans un four de verrerie. Il peut par exemple s'agir de fioul lourd. Dans ce cas, un fluide de pulvérisation (comme l'air ou du gaz naturel) est utilisé pour pulvériser ledit combustible liquide. Le combustible liquide est généralement injecté à une température comprise entre 100 et 150°C, de préférence encore entre 120 et 140°C. Le combustible liquide a généralement une viscosité au moins égale à 5.10⁻⁶ m²/s, notamment comprise entre 10⁻⁵ et 2.10⁻⁵ m²/s. Le combustible peut également être un gaz comme le gaz naturel, le méthane, l'air enrichi au butane, l'air enrichi au propane.

L'injecteur selon l'invention peut également être mixte, c'est-à-dire comprendre une arrivée de gaz combustible et une arrivée de liquide combustible, ces deux combustibles étant injectés alternativement ou simultanément. Dans ce cas, les orifices délivrant les jets divergents peuvent équiper l'arrivée de combustible liquide ou l'arrivée de combustible gazeux.

Généralement, le dispositif d'émission de combustible (comme un injecteur) est placé sous l'arrivée de comburant. L'arrivée de comburant, généralement appelée veine d'air, est assurée par une ouverture de section relativement importante, dont l'aire (ou la section) peut notamment être comprise entre 0,5 et 2 m² au niveau de chaque paroi latérale (et donc par brûleur), plusieurs injecteurs pouvant être associés à chaque arrivée d'air (notion de groupe d'injecteurs) de chaque brûleur. Le rapport de l'aire de la section de l'arrivée d'air sur l'aire de la section de l'arrivée de combustible (c'est-à-dire la somme des aires des sections d'arrivées de combustible, étant entendu qu'il y a plusieurs orifices d'arrivée de combustible par injecteur de brûleur et qu'il peut y avoir plusieurs injecteurs par brûleur) va généralement de 10 à 100. Le conduit d'amenée du comburant présente une voûte inclinée vers le bas (dans le sens de circulation du comburant) pour que le comburant prenne une direction orientée vers la surface du bain de verre. La voûte du conduit d'amenée du comburant fait généralement avec l'horizontale un angle allant de 18 à 30°. La direction d'émission du combustible est généralement légèrement orientée vers le haut (dans le sens de circulation du combustible). Elle fait un angle avec l'horizontale allant généralement de 3 à 12°.

Chaque brûleur transversal du four a généralement une puissance allant de 4 à 12 mégawatts.

Les régénérateurs, bien connus de l'homme du métier, servent à récupérer de la chaleur des fumées de combustion. Ils équipent les fours à brûleurs transversaux et les fours à boucle. Ils sont constitués d'éléments réfractaires placés dans des compartiments séparés fonctionnant alternativement.

La présente invention concerne tous types de four verrier (comme à brûleurs transversaux ou à boucle) notamment pour la fusion du verre en vue de son formage en verre plat dans une unité de flottage ou pour faire du verre creux (bouteilles, flacons, etc.). Le verre coule dans le four d'une paroi amont vers une paroi aval et entre deux parois latérales (piédroits).

Les fours à brûleurs transversaux sont généralement équipés d'au moins trois brûleurs dans chacune de ses parois latérales et d'autant de régénérateurs que de brûleurs pour alternativement chauffer le comburant et collecter les fumées. Pendant qu'un premier brûleur d'une première paroi latérale fonctionne et produit une flamme dont le comburant est amené et chauffé par un premier régénérateur situé derrière ledit premier brûleur, les fumées sont collectées et acheminées vers un deuxième régénérateur qui en récupère la chaleur, ledit deuxième régénérateur étant placé en face dudit premier brûleur derrière une deuxième paroi latérale. Un deuxième brûleur est placé dans la deuxième paroi latérale et fait face au premier brûleur mais ne fonctionne pas lorsque le premier brûleur fonctionne. De manière cyclique, on inverse le fonctionnement des deux brûleurs se faisant face, en arrêtant le fonctionnement du premier brûleur et en mettant en fonctionnement le deuxième brûleur dont le comburant est amené et chauffé par le deuxième régénérateur (qui lors de l'étape précédente servait de collecteur de fumées). Le premier régénérateur sert alors de collecteur de fumées. On fait donc fonctionner le four dans un sens pendant un temps fixé (10 à 40 minutes par exemple) puis l'on inverse le fonctionnement du four. Dans le cas d'un four à brûleurs transversaux, les régénérateurs sont placés derrière les parois latérales du four. Dans le cas d'un four à brûleurs transversaux, les parois latérales (parallèles entre elles) équipées des brûleurs transversaux sont généralement distantes l'une de l'autre de 7 à 16 mètres. Chaque piédroits d'un tel four est généralement équipé de 3 à 10 brûleurs transversaux (ou 3 à 10 ensembles injecteur(s)/arrivée de comburant), soit 6 à 20 brûleurs ou ensembles d'injecteur(s)/arrivée d'air en tout pour le four.

Un four à boucle comprend une face amont, deux faces latérales et une face aval. Il est muni de deux brûleurs identiques, juxtaposés et placés tous deux dans la face amont. Il est également muni de deux régénérateurs identiques, juxtaposés et placés tous deux derrière la face amont. Chaque régénérateur est placé derrière une moitié de la face amont. Des niches sont ménagées dans les parois latérales pour l'introduction des matières vitrifiables. Ces niches sont placées dans le premier tiers amont des parois latérales. La flamme est issue d'un brûleur placé dans une première moitié de la face amont. Elle forme une boucle dans l'atmosphère du four pour retourner vers la deuxième moitié de la face amont. Les fumées traversent alors le régénérateur placé derrière la deuxième moitié de la face amont. Lorsque les briques réfractaires dans le régénérateur sont suffisamment chaudes, le fonctionnement du four est inversé. Dans ce cas, la flamme est issue du brûleur de la deuxième moitié de la face amont et la chaleur des fumées est récupérée dans le régénérateur de la première moitié de face amont. Le verre s'écoule à travers un orifice ménagé dans la face aval du four.

Le brûleur double-impulsion selon l'invention présente une grande souplesse d'utilisation puisqu'à débit constant de combustible et impulsion constante de combustible, il est possible de régler la longueur de flamme en jouant sur la pression de la canalisation haute pression et en contrebalançant la variation de la pression de la haute pression par celle de la basse pression afin de garder le même débit de combustible au total.

Dans le cas d'un brûleur double-impulsion à un seul jet de combustible la flamme tend à être trop longue à même puissance, ce qui conduit à une trop forte température dans le régénérateur.

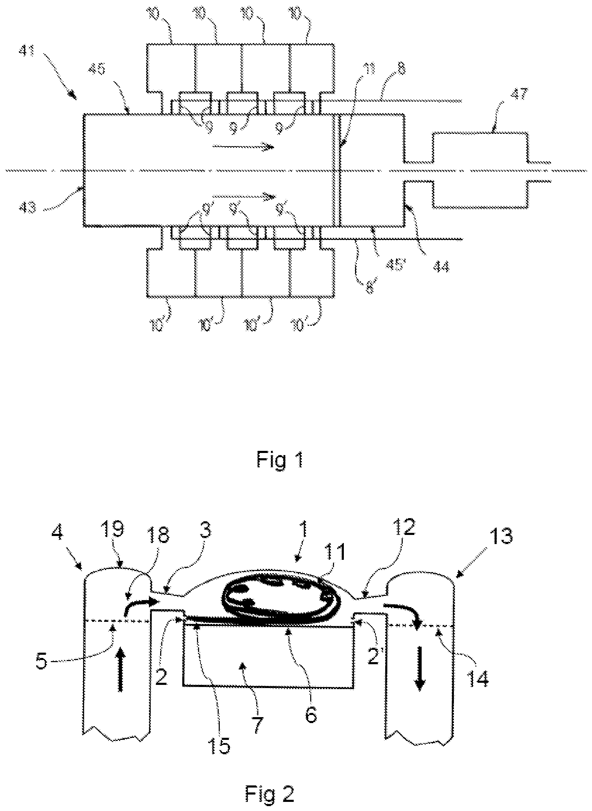

La figure 1 représente, vu de dessus, un four 41 de fusion de verre à brûleurs transversaux et régénérateurs. Le four 41 comprend une paroi amont 43, une paroi aval 44 et deux parois latérales (ou piédroits) 45 et 45'. Les matières vitrifiables sont introduites dès la paroi amont 43 par un dispositif habituel non représenté. Les matières vitrifiables fondues coulent de l'amont vers l'aval comme indiqué par les flèches. Dans le cas représenté, le verre passe dans une braise 47 à des fins de conditionnement thermique avant d'aller dans l'unité de transformation non représentée et pouvant être une installation de verre flotté pour la production de verre plat. Le four 41 est équipé au travers de ses deux parois latérales de quatre brûleurs pour chaque paroi, c'est-à-dire de deux rangées de quatre brûleurs aériens fonctionnant l'un après l'autre. Chaque brûleur aérien comprend un injecteur (ou groupe d'injecteurs) de combustible alimenté par les canalisations 8 et 8', et une arrivée d'air chaud 9 et 9'. L'injecteur (ou groupe d'injecteurs) est situé en dessous de l'arrivée d'air. Les ouvertures 9 et 9' jouent alternativement le rôle d'arrivée d'air chaud et celui de collecteur de fumées. Elles sont reliées chacune à un régénérateur 10, 10'. Lorsque les injecteurs de la paroi 45 fonctionnent, ceux de la paroi 45' ne fonctionnent pas. Les fumées passent à travers les ouvertures 9' de la paroi latérale 45' en face d'eux et leur chaleur est récupérée dans les régénérateurs 10. Au bout de quelques dizaines de minutes, on inverse le fonctionnement du four, c'est-à-dire que l'on arrête le fonctionnement des brûleurs de la paroi 45 (arrêt de gaz combustible à travers la canalisation 8 et arrêt d'air à travers les ouvertures 9) et on met en route les brûleurs aériens de la paroi 45' en alimentant ses injecteurs par la canalisation 8' et en alimentant en air chaud les arrivées d'air 9'. L'air est chaud grâce au réchauffement par les régénérateurs 10. Au bout de quelques dizaines de minutes, on inverse encore le fonctionnement du four et ainsi de suite (répétition du cycle d'inversion). Le four est ici muni d'un mur immergé 11 favorisant la formation de courroies de convection dans le verre fondu.

La figure 2 représente un four 1 à brûleurs transversaux, en coupe vu de côté dans l'axe d'écoulement du verre 7, le plan de coupe passant par deux brûleurs et deux régénérateurs. Le four est en cours de fonctionnement. Il contient un bain de verre 7 en fusion. Les injecteurs 2 et 2' (seul l'injecteur 2 est en fonctionnement sur la figure 2) sont placés en vis-à-vis dans les piédroits (parois latérales) du four. Une flamme 15 s'échappant du brûleur de gauche, lequel comprend l'injecteur 2 et l'arrivée de comburant 3. Le comburant est réchauffé après passage dans le régénérateur 4 qui contient des empilements de réfractaire sous la ligne en pointillé 5, la partie du régénérateur au-dessus de cette ligne étant le cerveau 18 du régénérateur, ledit cerveau comprenant une voûte 19. Le comburant suit le trajet des flèches épaisses dans le régénérateur 4 et débouche dans le four au-dessus de l'injecteur 2. Ici, le rapport R est bien réglé entre 5 et 13 et la flamme est bien plaquée à la surface 6 du verre fondu 7. Les fumées de combustion 11 ont tendance à former une boucle de circulation au-dessus de la flamme en retour vers le brûleur d'où vient la flamme. Ce retour de fumée repousse la flamme vers le bas et la plaque favorablement à la surface du verre. Les fumées s'échappent par le conduit 12 du régénérateur 13 placé en vis-à-vis du brûleur en fonctionnement et suivent le trajet des flèches épaisses dans le régénérateur 13. Ces fumées chauffent les réfractaires du régénérateur 13 disposés sous la ligne en pointillé 14.

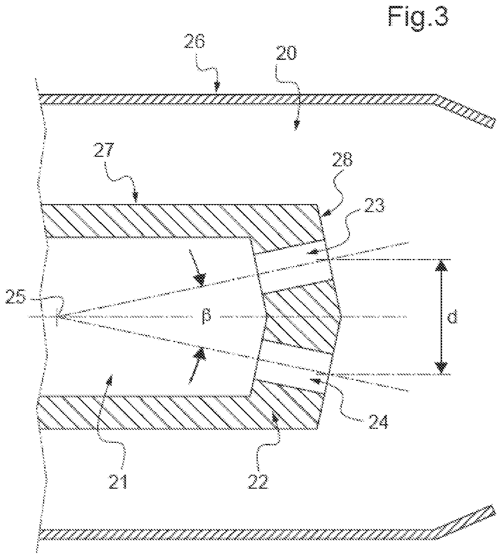

La figure 3 illustre un injecteur selon l'invention. Il est du type double-impulsion comprenant deux arrivées concentriques de combustible, une arrivée extérieure 20 de combustible basse pression et une arrivée intérieure de combustible haute pression 21. Une seconde canalisation 26 servant à la basse pression entoure ou contient une première canalisation 27 servant à la haute pression. La partie haute pression comprend un embout 28 comprenant deux orifices 23 et 24. L'axe de ces orifices est divergent d'un angle bêta de 22°. La distance d entre les axes des orifices à la sortie des orifices (points d'émission du combustible) est inférieure à 150 mm. Le point de convergence 25 des axes des orifices est à l'intérieure de la canalisation unique 27 alimentant les deux orifices.

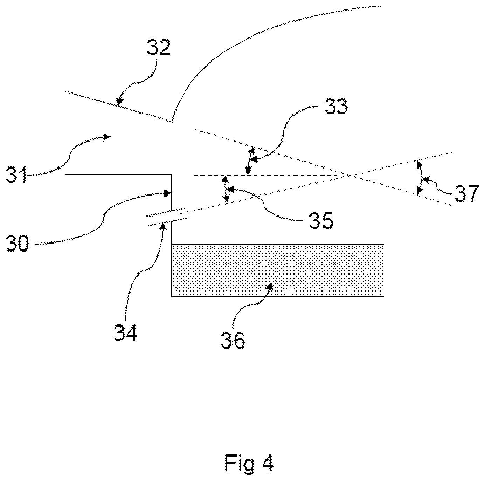

La figure 4 illustre les orientations données aux fluides comburant et combustible dans un piédroit 30 de four contenant un bain de verre en fusion 36. Le comburant débouche dans le four par un conduit 31 de grande section, la voute 32 dudit conduit étant orientée vers le bas et forme avec l'horizontale un angle 33 (18 à 30°). Le conduit d'amenée de combustible 34 est de petite section et forme avec l'horizontale un angle 35 (3 à 12°). Ainsi, les directions données au combustible et au comburant sont convergentes au moment ou combustible et comburant quittent leur conduit d'amenée respectif. L'angle 37 formé entre la direction de la voûte du conduit d'amenée de comburant et la direction du conduit d'amenée de combustible est la somme des angles 33 et 35 (ladite somme étant généralement comprise entre 21 et 42°).

### Exemple 1 (comparatif)

On procède à des essais sur un four de fusion de verre suivi d'une enceinte de formage de verre plat par flottage sur étain fondu. Le four de fusion avait une tirée de 560 tonnes par jour et était équipé de 7 brûleurs transversaux à régénérateurs pour une puissance totale de 36,8 Mégawatts. La puissance des quatre premier brûleurs amont était d'environ 18% de la puissance totale et la puissance diminuait ensuite progressivement jusqu'à 5 % de la puissance totale pour le dernier brûleur en aval. Les injecteurs étaient tous du type à double impulsion gaz (orifice d'émission de 16 mm pour la haute pression) alimentés en gaz naturel sous une pression de 45 mbars pour la haute pression et de quelques millibars pour la basse pression. Le jet haute pression était simple. La puissance des brûleurs était réglée par le débit du gaz naturel basse-pression. Chaque veine d'air était munie de deux injecteurs. L'aire de la section de la veine d'air était de 0,75 m². La somme des aires des sections d'injecteurs par brûleur était de 0,0136 m².

On mesure une température de 1440°C dans le haut de régénérateur (cerveau) faisant face au deuxième brûleur à partir de l'amont.

### Exemple 2

On procède comme pour l'exemple 1 sauf que le second brûleur à partir de l'amont était un brûleur selon l'invention. Il était muni d'une veine d'air sous laquelle se trouvaient deux injecteurs à double-impulsion, chaque injecteur comprenant deux arrivées concentriques de gaz naturel, l'arrivée basse pression entourant l'arrivée haute pression à 45 mbars. L'arrivée haute pression était équipée d'une tête à deux orifices générant deux jets divergents de 22°. Les axes des deux jets à l'émission étaient dans un plan horizontal. La puissance de ce brûleur étaient les mêmes que celle du second brûleur amont de l'exemple 1. On mesure une température de 1420°C dans la partie haute (également appelée cerveau) du régénérateur faisant face au deuxième brûleur à partir de l'amont.

## Revendications

1. Four verrier (41, 1) comprenant un brûleur produisant une flamme, ledit brûleur comprenant une arrivée de comburant (3, 31) et un injecteur (2, 34) à double impulsion de combustible placé dans une des parois du four, **caractérisé en ce que** ledit injecteur comprend deux canalisations séparées de combustible alimentées chacune par des pressions différentes de combustible, une première canalisation (27) dite haute pression comprenant en son bout au moins deux orifices (23, 24) d'émission de combustible, les axes desdits deux orifices divergeant d'au moins 16°, et une deuxième canalisation (26) dite basse pression, la deuxième canalisation (26) entourant la première (27), la pression dans la canalisation haute-pression étant supérieure à la pression dans la canalisation basse-pression.

2. Four selon la revendication précédente, **caractérisé en ce que** les axes des deux orifices (23, 24) d'émission de combustible divergent d'au plus 40°.

3. Four selon l'une des revendications précédentes, **caractérisé en ce que** la distance (d) entre les axes des deux orifices d'émission de combustible à la sortie des deux orifices est de moins de 150 mm.

4. Four selon l'une des revendications précédentes, **caractérisé en ce qu'**il existe un point de convergence (25) des axes des orifices, lequel se trouve dans la première canalisation (27) alimentant les deux orifices (23, 24).

5. Four selon l'une des revendications précédentes, **caractérisé en ce que** l'arrivée de comburant (3, 12) présente une section comprise entre 0,5 et 2 m².

6. Four selon l'une des revendications précédentes, **caractérisé en ce que** le rapport de l'aire de la section de l'arrivée de comburant sur l'aire de la section d'arrivée de combustible va de 10 à 100.

7. Four selon l'une des revendications précédentes, **caractérisé en ce que** les axes des deux orifices d'émission de combustible sont dans le même plan horizontal.

8. Four selon l'une des revendications précédentes, **caractérisé en ce qu'**il comprend un régénérateur (10, 10', 4, 13) récupérant les fumées du brûleur.

9. Four selon l'une des revendications précédentes, **caractérisé en ce qu'**il est un four à brûleurs transversaux (41, 1) ou un four à boucle.

10. Procédé de chauffage de verre par un four de l'une des revendications de four précédentes, la pression dans la canalisation haute-pression étant supérieure à la pression dans la canalisation basse-pression.

11. Procédé selon la revendication précédente, **caractérisé en ce que** le comburant est l'air ou l'air enrichi en oxygène et comprend une teneur en oxygène supérieure à 15 vol % et inférieure à 30 vol %.

12. Procédé selon la revendication précédente, **caractérisé en ce que** le comburant comprend une teneur en oxygène inférieure à 25 vol %.

13. Procédé selon l'une des revendications précédentes de procédé, **caractérisé en ce que** la canalisation haute pression (27) délivre 5 à 30% de la somme des débits des canalisations basse (26) et haute pression (27).

14. Procédé selon l'une des revendications précédentes de procédé, **caractérisé en ce que** le combustible (21) de la canalisation haute pression (27) est gazeux et **en ce que** sa pression avant émission par les orifices (23, 24) est comprise entre 20 et 100 mbars.

15. Procédé selon l'une des revendications 10 à 13 **caractérisé en ce que** le combustible (21) de la canalisation haute pression (27) est liquide, et **en ce que** sa pression avant émission par la canalisation haute pression est comprise entre 3 et 15 bars.

16. Procédé selon l'une des revendications précédentes de procédé, **caractérisé en ce que** la pression du combustible gazeux (20) dans la canalisation (26) basse pression avant son émission est comprise entre 0 et 50 mbars.

## Patentansprüche

1. Glasofen (41, 1), umfassend einen Brenner, der eine Flamme produziert, wobei der Brenner einen Verbrennungsmitteleinlass (3, 31) und einen Doppelimpuls-Brennstoffinjektor (2, 34) umfasst, der in einer der Wände des Ofens platziert ist, **dadurch gekennzeichnet, dass** der Injektor zwei getrennte Brennstoffkanäle umfasst, die jeweils mit verschiedenen Brennstoffdrücken versorgt werden, wobei ein erster Hochdruckkanal (27) an seinem Ende mindestens zwei Brennstoffemissionsöffnungen (23, 24) umfasst, wobei die Achsen der zwei Öffnungen um mindestens 16° divergieren, und einen zweiten Niederdruckkanal (26), wobei der zweite Kanal (26) den ersten (27) umgibt, wobei der Druck im Hochdruckkanal höher als der Druck im Niederdruckkanal ist.

2. Ofen nach dem vorangehenden Anspruch, **dadurch gekennzeichnet, dass** die Achsen der zwei Brennstoffemissionsöffnungen (23, 24) höchsten um 40° divergieren.

3. Ofen nach einem der vorangehenden Ansprüche, **dadurch gekennzeichnet, dass** der Abstand (d) zwischen den Achsen der zwei Brennstoffemissionsöffnungen am Ausgang der zwei Öffnungen weniger als 150 mm beträgt.

4. Ofen nach einem der vorangehenden Ansprüche, **dadurch gekennzeichnet, dass** es einen Konvergenzpunkt (25) der Achsen der Öffnungen gibt, welcher sich im ersten Kanal (27) befindet, der die zwei Öffnungen (23, 24) versorgt.

5. Ofen nach einem der vorangehenden Ansprüche, **dadurch gekennzeichnet, dass** der Verbrennungsmitteleinlass (3, 12) einen Querschnitt zwischen 0,5 und 2 m² aufweist.

6. Ofen nach einem der vorangehenden Ansprüche, **dadurch gekennzeichnet, dass** das Verhältnis der Querschnittsfläche des Verbrennungsmitteleinlasses zur Querschnittsfläche des Brennstoffeinlasses von 10 bis 100 beträgt.

7. Ofen nach einem der vorangehenden Ansprüche, **dadurch gekennzeichnet, dass** die Achsen der zwei Brennstoffemissionsöffnungen in der gleichen horizontalen Ebene sind.

8. Ofen nach einem der vorangehenden Ansprüche, **dadurch gekennzeichnet, dass** er einen Regenerator (10, 10', 4, 13) umfasst, der die Rauchgase des Brenners zurückgewinnt.

9. Ofen nach einem der vorangehenden Ansprüche, **dadurch gekennzeichnet, dass** er ein Ofen mit transversalen Brennern (41, 1) oder ein U-Flammenofen ist.

10. Verfahren zum Erhitzen von Glas mit einem Ofen nach einem der vorangehenden Ofenansprüche, wobei der Druck im Hochdruckkanal höher als der Druck im Niederdruckkanal ist.

11. Verfahren nach dem vorangehenden Anspruch, **dadurch gekennzeichnet, dass** das Verbrennungsmittel Luft oder mit Sauerstoff angereicherte Luft ist und einen Sauerstoffgehalt von über 15 Vol.-% und unter 30 Vol.-% umfasst.

12. Verfahren nach dem vorangehenden Anspruch, **dadurch gekennzeichnet, dass** das Verbrennungsmittel einen Sauerstoffgehalt von unter 25 Vol.-% umfasst.

13. Verfahren nach einem der vorangehenden Verfahrensansprüche, **dadurch gekennzeichnet, dass** der Hochdruckkanal (27) 5 bis 30 % der Summe der Leistungen des Nieder- (26) und Hochdruckkanals (27) bereitstellt.

14. Verfahren nach einem der vorangehenden Verfahrensansprüche, **dadurch gekennzeichnet, dass** der Brennstoff (21) des Hochdruckkanals (27) gasförmig ist, und dass sein Druck vor Emission durch die Öffnungen (23, 24) zwischen 20 und 100 mbar beträgt.

15. Verfahren nach einem der Ansprüche 10 bis 13, **dadurch gekennzeichnet, dass** der Brennstoff (21) des Hochdruckkanals (27) flüssig ist, und dass sein Druck vor Emission durch den Hochdruckkanal zwischen 3 und 15 bar beträgt.

16. Verfahren nach einem der vorangehenden Verfahrensansprüche, **dadurch gekennzeichnet, dass** der Druck des gasförmigen Brennstoffs (20) im Niederdruckkanal (26) vor seiner Emission zwischen 0 und 50 mbar beträgt.

## Claims

1. A glass furnace (41, 1) comprising a burner producing a flame, said burner comprising an air feed (3,31) and a dual fuel pressure injector placed in one of the walls of the furnace, **characterized in that** said injector comprises two separate fuel ducts, each of which is supplied with different fuel pressures, a first so-called high-pressure duct (27) comprising at least two fuel emission orifices (23, 24) at its tip, the axes of said two orifices diverging by at least 16°, and a second so-called low-pressure duct (26), the second duct (26) surrounding the first (27), the pressure in the high-pressure duct being higher than the pressure in the low-pressure duct.

2. The furnace as claimed in the preceding claim, **characterized in that** the axes of the two fuel emission orifices (23, 24) diverge by at most 40°.

3. The furnace as claimed in one of the preceding claims, **characterized in that** the distance (d) between the axes of the two fuel emission orifices at the exits of the two orifices is less than 150 mm.

4. The furnace as claimed in one of the preceding claims, **characterized in that** there is a convergence point (25) of the axes of the orifices, which lies in the first duct (27) supplying the two orifices (23, 24) .

5. The furnace as claimed in one of the preceding claims, **characterized in that** the air feed (3, 12) has a cross section of between 0.5 and 2 m².

6. The furnace as claimed in one of the preceding claims, **characterized in that** the ratio of the cross-sectional area of the air feed to the fuel feed cross-sectional area ranges from 10 to 100.

7. The furnace as claimed in one of the preceding claims, **characterized in that** the axes of the two fuel emission orifices lie in the same horizontal plane.

8. The furnace as claimed in one of the preceding claims, **characterized in that** it comprises a regenerator (10, 10', 4, 13) recovering the fumes of the burner.

9. The furnace as claimed in one of the preceding claims, **characterized in that** it is a transverse-burner (41, 1) furnace or a loop furnace.

10. A method for heating glass using a furnace of one of the preceding furnace claims, the pressure in the high-pressure duct being higher than the pressure in the low-pressure duct.

11. The method as claimed in the preceding claim, **characterized in that** the oxidant is air or enriched air and comprises an oxygen content of higher than 15 vol% and lower than 30 vol%.

12. The method as claimed in the preceding claim, **characterized in that** the oxidant comprises an oxygen content lower than 25 vol%.

13. The method as claimed in one of the preceding method claims, **characterized in that** the high-pressure duct (27) delivers from 5 to 30% of the sum of the flow rates of the low- (26) and high-pressure (27) ducts.

14. The method as claimed in one of the preceding method claims, **characterized in that** the fuel (21) of the high-pressure duct (27) is gaseous, and **in that** its pressure before emission through the orifices (23, 24) lies between 20 and 100 mbar.

15. The method as claimed in one of claims 10 to 13, **characterized in that** the fuel (21) of the high-pressure duct (27) is liquid, and **in that** its pressure before emission through the high-pressure duct lies between 3 and 15 bar.

16. The method as claimed in one of the preceding method claims, **characterized in that** the pressure of the gaseous fuel (20) in the low-pressure duct (26) before its emission lies between 0 and 50 mbar.
